# EUROPEAN PATENT APPLICATION

(11) **EP 2 866 104 A1**
(43) Date of publication of application: **29.04.2015**
(21) Application number: 13189639.1
(22) Date of filing: 22.10.2013
(51) Int. Cl.: G05B 17/02

(54) **Bode plot generation system**

(71) Applicant: ROBERT BOSCH GMBH, 70442 Stuttgart (DE)
(72) Inventor: Eperjesy, Istvan, 5708 KD Helmond (NL)
(74) Representative: Thürer, Andreas

(57) **Abstract**

The invention relates to a Bode-Plot Generator System (1) embedded or embeddable in a control circuit (2) comprising a Bode-Plot Generator (3) to generate a Bode-Plot (4), characterized by,
a means (5) for panning of a phase plot (6A) (6B) of said Bode-Plot (4) on a display means (7), wherein said means (5) for panning said toggle region (61) is designed in such a way as to pan said toggle region (61) on said display means (7) in at least a phase direction of the phase plot (6A) of said Bode-Plot (4) in a user-defined manner on a display area (71) of said display means (7).

## Description

The present invention relates to a Bode-plot generator system as well as a method for panning a toggle region of and/or within a Bode-plot according to the preamble of the patent claims 1 and 8.

Such Bode-plot generator systems according to the preambles of the independent claims are well-known in the prior art. In particular, the prior art provides Bode-plot generator systems in which a toggle region within a Bode-plot comprising a phase as well as a magnitude plot of a control circuit can be displayed and/or generated.

A Bode-plot is a graph of a transfer function of a linear, time-invariant system versus frequency, plotted with a log-frequency axis to show the system's frequency response. It is usually a combination of a Bode magnitude plot expressing the magnitude of the frequency response gain and a Bode-phase plot expressing the frequency response phase shift.

The magnitude axis of the Bode-plot is usually expressed as decibels of power that is by the 20 log rule: 20 times the common (base) 10 logarithm of the magnitude gain. With the magnitude gain being logarithmic, Bode-plots make multiplication of magnitudes a simple matter of adding distances on the graph.

However, much information is included and can be read out from a toggle region of a Bode-plot. A toggle region of the Bode-plot, for example a toggle region within the phase plot of said Bode-plot, is a region for example along the frequency direction of the phase plot in which the responding phase shift of the control circuit is highly variable and therefore toggling between - 180° and + 180°. In other words information about the behavior of a control circuit and in particular a response of the control circuit to an incoming frequency excitation is included in much detail within said toggle region. The problem that often occurs during an analysis process is that said toggle region is difficult to interpret, for example with the naked eye.

In order to interpret the toggle region in more detail, it is prior art to unwrap said toggle region, in other words to stretch said toggle region in an excitation frequency direction and/or in a direction of the phase shift. However, such an unwrapping of the toggle region can give the user and/or the interpreter a misguiding impression of the behavior and response of the electronic circuit as he or she has to particularly take care of the resolution and the unwrapping scale used. In other words the prior art's unwrapping can bear the danger of a misinterpretation of the Bode diagram.

Therefore, it is an object of the present invention to provide a Bode-plot generator system in which the above-mentioned problems are prevented and therefore to provide a Bode-plot generator system with which an interpretation of a toggle region of a Bode-plot is made very easily wherein at the same time a misinterpretation of the toggle region is prevented.

Said object is solved by the subject matter presently claimed in pending claim 1.

In order to provide a Bode-plot generator system with which an interpretation of a toggle region of a Bode-plot is made very easily wherein at the same time a misinterpretation of the toggle region is prevented the present invention relies, inter alia, on the basic principle that a means for panning of a phase plot of said Bode-plot on a display means is provided, wherein said means for panning said toggle region is designed in such a way as to pan said toggle region on said display means in at least the phase direction of the phase plot of said Bode-plot in a user-defined manner on a display area of said display means. In other words, toggling occurs because of the modulo behaviour of the phase-plot. In principle the concept is that panning in phase-direction shifts the modulo range from -180 => +180 to (e.g.) -200 - 160 degrees, which occurs in a different frequency range. This enhances the readability of the -180=>180deg area, at the cost of readability of the new area. This is beneficial in case important information is in the original area, and not so much in the new area. Consequently panning in the phase-direction creates a shift of the toggle-area in the frequency direction.

Consequently, by the usage of the above claimed means for panning of a toggle region in connection with the display means the user and/or interpreter is able to shift the toggle region which is often on an edge of the display area of said display means for example more centrally on said display area of said display means. The display means can comprise or be a screen wherein said display area is the area on which the Bode-plot is displayed and visible for the user. By shifting said toggle region in a more central region of said display area of said display means, the relevant part of the phase (e.g. ∼ 180°) can be displayed in more detail. Since the phase is a modulo 360°-number, everything that falls off at the top/bottom of the frame on which the Bode-display is displayed on the display area can be stitched on the bottom/top.

In other words, the user-defined location of the toggle region enhances the readability not only of the phase plot but also the whole Bode-plot itself.

According to at least one embodiment, the Bode-plot generator system embedded or embeddable in a control circuit comprises a Bode-plot generator to generate a Bode-plot. The Bode-plot generator system comprises a means for panning of a phase plot of said Bode-plot on a display means, wherein said means for panning said toggle region is designed in such a way as to pan said toggle region on said display means in at least the phase direction of the phase plot of said Bode-plot in a user-defined manner on a display area of said display means.

According to at least one embodiment, said means for panning said toggle region is capable of panning said toggle region in a center of said Bode-plot and/or said display area. "Center" is a point or a region on the display area spanned and generated by the frequency direction and phase direction axis of the Bode-plot, wherein both axes are extending in a rectangular manner with respect to each other. In other words, both axes are spanning a coordinate system. Therefore, the center of the Bode-plot and/or display area can be defined as a point which is defined in a geometric center of a rectangle spanned by both axes. By toggling the toggle region in the center of said Bode-plot and/or said display area, it is advantageously possible that in a particularly easy manner the phase plot and in particular the toggling region is focusable and readable very easily so that often an unwrapping can be completely relinquished.

According to at least one embodiment, said toggle region is pannable over the entire frequency direction of the phase plot of said Bode-plot. This allows a maximum on mobility for the user depending on his or her wishes and preferences as to where said toggling area and for example a center of said toggle region is to be displayed on the display area of the display means.

According to at least one embodiment, said toggle region is also pannable in a phase shift direction of said phase plot of said Bode-plot. This gives the user the possibility at hand not only to for example center the toggling region in the frequency direction but also to center the toggling region in the phase shift direction which gives a surprisingly obvious readability with a high resolution in both regions.

According to at least one embodiment, said means for panning of said toggle region comprises at least one input device for manually and/or automatically inputting the center point of the phase plot Frankly spoken, the toggling is a result of the signal being modulo-360. "Extent of said toggle region" means nothing but a bench mark or scale of the shift of the toggle region in order to enhance readability of said toggle region. For example said means comprises a mouse or a keyboard by the help of which a focusing of the toggling and a shift of the toggling or toggle region is generated and controllable.

According to at least one embodiment, said means for panning of said toggle region comprises at least one touch screen for panning said center of said toggle region. The implementation of said touch screen enhances not only the accessibility of toggling of said toggle region but is also particularly user-friendly. In order to toggle said toggle region, the user namely just has to for example put his or her finger on the toggle region which is output by the Bode-plot generator on the display area of said display means, keep his finger of the user in touch with the toggle region and shift the toggle region within the frame to the center of the display area of said display means. By way of example it is also possible that the touch screen is an element of the display means. In other words the display means can also or alternatively comprise said touch screen. In this manner for example a mouse or a keyboard can be relinquished and replaced by the touchability of said touch screen which at least in part can serve as the means for panning of said toggle region.

According to at least one embodiment said means for panning of said toggle region is capable of unwrapping the toggle region in a user-defined manner. "User- defined manner" means in this context that the user can focus and zoom in in a predefined subrange for example in the frequency direction and/or phase direction in order to increase the extent of the toggle region within the Bode-plot. It is particularly advantageous if the means for panning of said toggle region is not only capable of unwrapping the toggle region but also of panning said toggle region. In other words in the means for panning of said toggle region it is presently claimed that both functions, that means panning and unwrapping of the toggle region, can be combined within one means wherein both advantageous functions for enhancing the readability of the toggle region can be implemented within one device.

Technically spoken, the ,wrapping' of the phase is because of it being modulo-360. Unwrapping means that an algorithm is applied that detects a -180 => 180 change in a small frequency range, and adds / subtracts 360 deg, to stitch the line together. This results in phase-values outside -180 => 180 deg range. The total range can also exceed the 360deg this way.

The panning in the phase-direction allows a user to set the modulo-range anywhere between 0=>360deg and -360=>0deg. (including -180=>180deg.

Further, the present application relates to a method for panning a toggle region of/or within a Bode-plot. The method comprises the use of a Bode-plot generator system as outlined in the context of at least one of the preceding embodiments. This means each and every feature disclosed by the Bode-plot generator system described above is also disclosed by and for the method for panning a toggle region of /or within a Bode-plot.

In particular, the method for panning a toggle region of/or within a Bode-plot comprises a Bode-plot generator system embedded or embeddable in a control circuit wherein said Bode-plot generation system comprises a Bode-plot generator to generate said Bode-plot. Further, said Bode-plot generator system and in particular said method for panning a toggle region comprises a means for panning of a phase plot of said Bode-plot on a display means, wherein said means for panning said toggle region pans said toggle region on said display means in at least the phase direction of the phase plot of said Bode-plot in a user-defined manner on a display area of said display means.

Thereby the method described herein also comprises the same embodiments as well as the same advantages of said embodiment as described above and in the context of the Bode-plot generator system.

Further advantages and an embodiment will become evident from the attached drawing wherein:

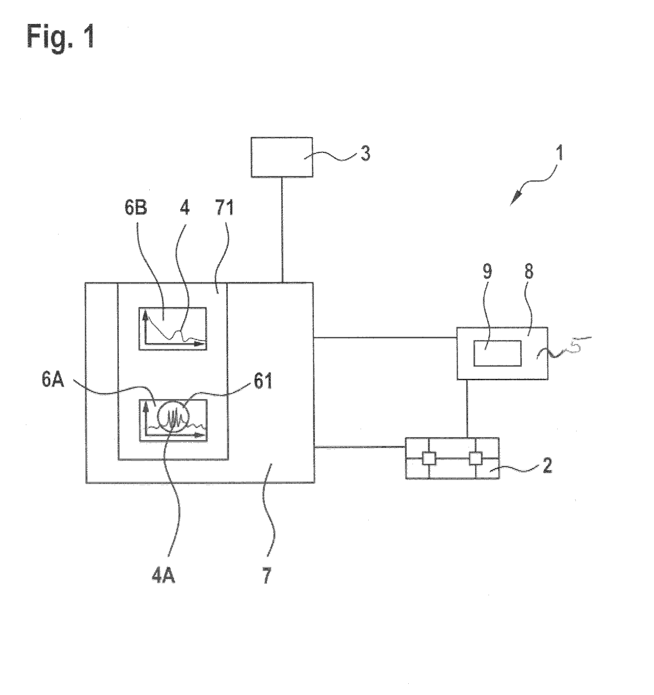

- Fig. 1: shows in a schematic drawing an embodiment of the Bode-plot generator system as well as a method for panning a toggle region of /or within a Bode-plot described herein.

Figure 1 shows a Bode-plot generator system 1 embedded or embeddable in a control circuit 2 comprising a Bode-plot generator 3 to generate a Bode-plot 4. Further, from figure 1 it is discernable that the Bode-plot generator system 1 comprises a means 5 for panning of a toggle region 61 and/or of a phase plot 6A and/or a magnitude plot 6B of said Bode-plot 4 on a display means 7. In particular, said means 5 for panning said toggle region 61 is designed in such a way as to pan said toggle region 61 on said display means 7 in at least the phase direction of the phase plot of said Bode-plot in a user-defined manner on a display area 71 of said display means 7.

More concretely, said means 5 for panning said toggle region 61 is capable of panning said toggle region 61 in a center 4A of said Bode-plot 4 and/or said display area 71. Further, the toggle region 61 is pannable along the entire frequency direction of the phase plot 6A of said Bode-plot 4. In this way it is made possible that the center 4A of said Bode-plot 4 is shifted corresponding to the explicit wishes of the user in order to enhance the visibility and the readability of the toggle region particularly easily and user-friendly.

Further, as can be discerned from figure 1, said toggle region 61 is also pannable in a phase shift direction of said phase plot of said Bode-plot.

In order to pan said toggle region 61 in a reliable and easy manner on the display area 71 of said display means 7, the Bode-plot generator system 1 comprises at least one input device 8 for manually and/or automatically inputting the extent of toggling of said toggle region 61, wherein said input device 8 comprises at least one touch screen 9 for panning said center 4A of said toggle region 61.

In order to enhance the readability of the toggle region 61 for a user even more, the Bode-plot generator system 1 is capable of un-wrapping the toggle region 61 in a user-defined manner. In other words, the Bode-plot generator system 1 described herein is not only capable of panning a toggle region 61 of a phase plot 6A in a user-defined manner on a display area 71 of said means 7 but is also designed and able to unwrap the toggle region 61 in a user-defined manner at the same time so that both features, combined in said one single means 5.

Technically spoken, the, wrapping' of the phase is because of it being modulo-360. Unwrapping means that an algorithm is applied that detects a -180 => 180 change in a small frequency range, and adds / subtracts 360 deg, to stitch the line together. This results in phase-values outside -180 => 180 deg range. The total range can also exceed the 360deg this way. The panning in the phase-direction allows a user to set the modulo-range anywhere between 0=>360deg and -360=>0deg. (including -180=>180deg).

All of the features disclosed in the application document are claimed as being essential to the invention as far as they are novel compared to the prior art, either individually or in combination.

### List of reference signs

- 1: Bode-plot generator system
- 2: control circuit
- 3: Bode-plot generator
- 4: Bode-plot
- 4A: center
- 5: means for panning
- 6A: phase plot
- 6B: magnitude plot
- 7: display means
- 8: input device
- 9: touch screen
- 61: toggle region
- 71: display area

## Claims

1. Bode-Plot Generator System (1) embedded or embeddable in a control circuit (2) comprising a Bode-Plot Generator (3) to generate a Bode-Plot (4),
**characterized by**,
a means (5) for panning a phase plot (6A) of said Bode-Plot (4) on a display means (7), wherein said means (5) for panning said toggle region (61) is designed in such a way as to pan said toggle region (61) on said display means (7) in at least a phase direction of the phase plot (6A) of said Bode-Plot (4) in a user-defined manner on a display area (71) of said display means (7).

2. Bode-Plot Generator System (1) according to claim 1,
**characterized in that**,
said means (5) for panning a toggle region (61) is capable of panning said toggle region (61) in a center (4A) of said Bode-Plot (4) and/or said display area.

3. Bode-Plot Generator System (1) according to claim 1 or 2,
**characterized in that**,
said toggle region (61) is pannable along the entire frequency direction of the phase plot (6A) of said Bode-Plot (4).

4. Bode-Plot Generator System (1) according to at least one the preceding claims,
**characterized in that**,
said toggle region (61) is also pannable in a phase shift direction of said phase plot (6A) of said Bode-Plot (4).

5. Bode-Plot Generator System (1) according to at least one the preceding claims,
**characterized in that**,
said means (5) for panning of said toggle region (61) comprises at least one input device (8) for manually and/or automatically inputting a center (4A) of the Bode-Plot (4).

6. Bode-Plot Generator System (1) according to preceding claim,
**characterized in that**,
said means (5) for panning of said toggle region (61) comprises at least one touch screen (9) for panning said center (4A) of said toggle region (61).

7. Bode-Plot Generator System (1) to at least one the preceding claims,
**characterized in that**,
said means (5) for panning of said toggle region (61) is capable to unwrap the toggle region (61) in a user-defined manner.

8. Method for panning a toggle region (61) of and/or within a Bode-Plot (4) comprising a Bode-Plot Generator System (1), according to at least one of the claims 1 to 7, embedded or embeddable in a control circuit (2), wherein said Bode-Plot Generation System (1) comprises a Bode-Plot Generator (3) to generate said Bode-Plot (4),
**characterized by**,
a means (5) for panning of a phase plot (6A) of said Bode-Plot (4) on a display means (7), wherein said means (5) for panning said toggle region (61) pans said toggle region (61) on said display means (7) in at least a phase direction of the phase plot (6A) of said Bode-Plot (4) in a user-defined manner on a display area (71) of said display means (7).
